Europäisches Patentamt

(19) European Patent Office

Office européen des brevets

(11) Publication number: **0 016 740**
**B1**

## EUROPEAN PATENT SPECIFICATION

(45) Date of publication of patent specification: 01.02.84

(51) Int. Cl.³: **C 09 J 5/00, C 09 J 3/16**

(21) Application number: 80850020.1

(22) Date of filing: 26.02.80

(54) A process and a device for gluing with aminoplastic-based adhesive systems.

(30) Priority: 14.03.79 SE 7902305

(43) Date of publication of application:
01.10.80 Bulletin 80/20

(45) Publication of the grant of the patent:
01.02.84 Bulletin 84/5

(84) Designated Contracting States:
AT BE DE FR NL

(56) References cited:
BE - A - 659 470
DE - A - 2 715 820
FR - A - 769 588

The file contains technical information
submitted after the application was filed and not
included in this specification

(73) Proprietor: AB CASCO
Box 11010
S-100 61 Stockholm (SE)

(72) Inventor: Perciwall, Evert Wilford
Langpannestigen 21
S-125 33 Älvsjö (SE)

(74) Representative: Schöld, Zaid
c/o KemaNobel AB Patents Box 11065
S-100 61 Stockholm (SE)

Courier Press, Leamington Spa, England.

A process and a device for gluing with aminoplastic-based adhesive systems

Technical Field

The present invention relates to a process and a device for gluing with curable aminoplastic adhesives whereby a resin component and a hardener component, containing an acid or an acid-forming substance, are separately applied to the joint.

Background of the Invention

It is well known that in the work with curable adhesive systems problems of precuring often arise during the application of the adhesive and during the assembling of treated parts before the pressing. The problems are particularly pronounced when fast adhesive systems must be used, e.g. when short run-through times in the press are required or when hot-pressing cannot be used. If a ready-mix of resin and curing agent is used, it is necessary to clean the mixing and application equipment often, and sometimes as often as every twentieth minute, in order to avoid pre-curing problems. This pre-curing which occurs after mixing but before application of the adhesive mixture also shortens the available assembly-time before the pressing operation, which means that it is necessary to compromise about the press time which cannot be made as short as would be possible otherwise. It is known that these problems to a great extent can be avoided by separate application of the resin component and the hardener component respectively to the joint, whereby at least some of the cleaning problems are avoided. The best utilization of the curing time of the adhesive system is obtained if the adhesive components are kept separate until the assembling, e.g. by spreading the resin component on one of the surfaces of the joint and the hardener component on the other. In many cases it is, however, not possible to apply the components in such a manner that they are kept separate up to the assembling of the joint surfaces but the resin and the hardener component must be spread and mixed on the same joint surface, even if they are applied to this independent of each other. At e.g. veneering, or other types of lamination with thin layers, the thin materials often cannot stand a transport through and treatment in an application equipment and direct application of an adhesive or adhesive components on thin materials can furthermore cause visible penetration of glue on to the other side of the materials. Nor is it, from a practical and economical point of view, always possible to treat both joint surfaces. In order to utilize other advantages of the separate-application technique in those cases, it is previously known to first apply the resin component on one of the joint surfaces in the form of a layer and then to strew a powdered hardener on this resin layer. The use of a curing agent in powder form in this manner is, however, not free from problems. It is difficult to obtain a uniform layered distribution of the powder and the strength will then easily become uneven and visible shades on thin materials will often appear. The tendency of the powder to dusting will give some occupational problems and at a doublesided coating of a board material this must be turned over before the treatment on the opposite side. This complicated process of application in combination with the relatively slow distribution of the powder in the resin layer means that it has not been possible to reduce the press-times to any substantial extent using this method. In certain cases spraying is used as method of application and the problems of the powder are hereby avoided. It is, however, also with this method difficult to obtain an even distribution of small amounts of curing agent. Hygienic problems also arise due to splashing of the acidic hardener and splashes often cause corrosion on equipment. Using known processes it is thus difficult to obtain as well an uncomplicated process as press-times below about 1.5 hours, calculated as cold-pressing in the processes in question.

The Invention Generally

The object of the present invention is to avoid the above mentioned problems and to provide a simple gluing process which makes reduced press-times possible. This object is achieved by the process and the device according to the appended claims.

According to the invention a hardener in the form of an aqueous solution is used and hereby a uniform distribution of the hardener is made possible and the disadvantages of a powder hardener are avoided. The hardener is spread by means of a roll in order to achieve the most uniform distribution, which, as has been said above, is particularly important at lamination of thin materials. The hardener is applied before the resin in order to avoid that the hardener roll will get in contact with resin which might lead to pre-curing problems at the roll, and, besides, such a uniform application of the comparatively small amount of hardener could hardly be achieved in one layer on the resin, compared with direct application to the joint surface. Curing problems could then instead arise in the following resin application equipment at admixing of the hardener. It has, however, been found, particularly at slightly absorbing substrates, that no appreciable admixing of the curing agent in the resin component or resin application equipment occurs, provided that the curing agent is spread before the resin and that the spreading of the curing agent is very uniform. For this reason no ordinary spreading roll is used according to the invention but instead a hardener roll with a surface of a porous and absorbing material. It is hereby achieved that an optional locally pressed-out excess of hardener component at pressing of the roll against the joint surface is easily absorbed by this when its surface leaves the joint surface, and a very even distribution is obtained and the applied amount can at the same time comparatively easily regulated e.g. by dosage-rolls or contact pressure. At separate application, and particularly at lamination of thin materials, the amount of spread hardener is very small, something which normally causes application problems but which can be managed according to the described method. When spreading small amounts there is a risk that minor unevennesses in the treated surface will not be uniformly covered. The described roll will, however, easily penetrate into dents and pass elevations without change of the spread amount. Hereby spreading of both a too small and a too large amount is avoided, the former might lead to penetration of unreacted resin and the latter might lead to a too rapid curing and stickness at the application of the resin. Also the resin component is applied with a roll, which makes a simple and even spreading possible and gives in this case only a neglible risk of disturbances in production caused by the application of the curing agent. The efficient separate spreading means that more rapid adhesive systems than otherwise can be used without inconveniences. The process is particularly suitable when relatively small amounts are to be spread and when rapid adhesive systems are used, such as at cold-pressing processes.

The device of the invention comprises an application roll for the hardener said roll having a porous and absorbing surface in contact with a dosage-roll for exact dosage of the amount of hardener. The device also comprises a subsequent application roll for the resin and the system can advantageously be duplicated· for simultaneous coating of sheet materials.

Detailed Description of the Invention

The method and the device according to the invention are intended to be used when gluing with aminoplastic-based adhesives, such as melamin- and particularly urea-based adhesives. These can be of the conventional type having dry contents suitably between 60 and 70 per cent by weight. A suitable mole ratio of formaldehyde to urea is about 1.5:1 to 2.0:1. A suitable amount in which to spread the resin component when employing the present invention is between 50 and 300 grams/m² and preferably between 100 and 200 grams/m².

As has been mentioned the hardener is an aqueous solution of an acid or an acid-forming substance, the selection of the substance is to a high degree made with respect to the desired rapidity of the hardener. Suitable curing agents are e.g. phosphoric acid, trichloroacetic acid, maleic acid, citric acid, formic acid, aluminium sulphate, and ammonium chloride. Different acids can be mixed in a known manner and the hardener may contain buffer substances or other known additives. The rapidity of the hardener in combination with the resin, calculated as press-time at 20°C, can vary between 5 minutes and 5 hours or preferably between 10 minutes and 2 hours. The amount of curing agent in the hardener composition can, as usual, primarily be decided from the point of view that as concentrated a solution as possible should be used without risk of precipitations. The dry content is most often between about 15 and 25 per cent by weight. The applied amount is comparatively essential as even spreading cannot be achieved at very small spread amounts while high applied amounts give rise to difficulties at the application of the resin component. The most suitable spreading amounts varies between 10 and 40 g/m². The viscosity of the hardener component is kept low and preferably the component does not contain any thickening additives.

The hardener component is applied by means of a roll but in order to obtain a satisfactory even spreading for successful separate spreading on a surface, it has been found necessary not to employ a dense or hard roll of the conventional kind but a soft roll with pores which can absorb and soak up part of the hardener composition. The roll should thus essentially not supply the joint surface with hardner component via picking it up and releasing it from its surface in a conventional manner, but should supply at least the main part of the hardener component by its absorption into the porous surface of the roll and application to the joint surface by pressing-out at the pressing of the roll to the surface. This has the advantage that comparatively much of the hardener component is pressed-out on the joint surface where the roll is pressed towards this at the highest pressure and so that a wetting of the entire surface is ensured whereafter optional excess of the hardener component is again absorbed by the roll when this leaves its contact with the joint surface, so that an even spread amount in equilibrium with the amount of hardener absorbed in the roll is obtained. Suitable materials for the roll are foamed synthetic materials and particularly foam rubber. The roll is preferably smooth and without any grooves. It is not necessary that the entire roll is made of the porous material but it is sufficient that the surface has a coating of such material. The core can then consist of a metal cylinder or be a cylinder of other rigid material, whereby the roll gets a better stability than if the roll consisted entirely of the soft porous material. The thickness of the coating can vary between e.g. 3 and 50 mm but is preferably between 5 and 25 mm. It is important that there is a uniform soaking up of the hardener component in the roll at dosing. A special dosage roll is preferably used for the dosing and this roll is pressed against the hardener roll, whereby the composition is supplied from above between the rolls and the rolls are rotated in towards the place for supply and downwards. The amount of the hardener component on the joint surface is adjusted by regulation of the contact pressure between the rolls, whereby a higher pressure gives a smaller supplied amount. The contact pressure of the porous roll on the joint surface is of less importance with respect to the supplied amount but is of importance for the uniformity of the spreading and care should thus be taken to get a distinct compression of the porous surface of the roll at the contact with the joint surface. At correct dosage and application a very even spreading is obtained and as the application is carried out on a somewhat absorbing joint surface of e.g. wood based material a limited soaking-up is rapidly obtained and a slightly moistened, but not wet, surface is obtained. The application can advantageously be carried out double-sided on materials in the form of boards by arrangement of double porous rolls between which the board material is conveyed, and the rolls are then suitably provided with one dosage roll each, as above.

The resin component should be supplied after the application of the hardener component and immediately after the application of this. The resin component is also supplied by means of a roll as an even spreading thereby can be obtained even at small applied amounts. Application by means of rolls also simplifies a two-sided coating and reduces the risk of splashing. Use of the above described method for application of the hardener also involves very minor risks of hardener admixing and pre-curing problems in the resin application equipment, which risks otherwise can be annoying. The resin roll is preferably of the conventional kind, and can e.g. be a grooved roll made of hard rubber.

The present method and device can be employed whenever it is desired to spread resin and hardener in even layers on one and the same surface and can thus be employed for double-sided coating of the joint surfaces with both resin and curing agent. The invention is, however, particularly advantageous when two-sided coating of the joint is impractical or impossible, such as at veneering or lamination with thin or delicate materials. The process can be employed for adhesive systems of varying degrees of rapidity both for cold- and hot-pressing. As the application method gives a good separation effect between the adhesive components due to the fact that the components do not get into touch with each other until after the application of the resin component, and also as a consequence of a limited absorption of the hardener component in porous surfaces, the invention is particularly suitable at gluing with rapid-acting adhesive systems and where there are demands on short press-times despite a certain assembly time prior to the pressing. This makes the practice of the invention particularly advantageous at cold-pressing processes but also at highly mechanised hot-pressing processes. Coating of particle boards, fibre boards and other board materials with veneer, plastic layers or pure wood are thus important fields of application. The invention is, as has been mentioned, suited for two-sided coating of board materials.

The method and the device can advantageously be employed in such a manner that the material to be treated is conveyed past a stationary porous hardener roll and immediately thereafter past a stationary resin roll, whereby the rolls can be duplicated for double-sided coating, whereafter the treated material is assembled with other parts of the unit and, optionally after intermediate storing, is brought into a press for final curing.

### Example

20 grams/m² of an aqueous solution containing citric acid and aluminum sulphate and having a dry content of 20 per cent by weight were spread onto a particle board. The application was made with a steel cylinder coated with foam rubber. Immediately thereafter about 150 grams/m² of a urea resin pre-condensate having a dry content of about 67 per cent by weight were applied on the same surface. This application was carried out with a conventional grooved roll made of hard rubber. A plastic laminate was placed on the treated surface and after an assembly time of about 5 minutes the assembled parts were put into a cold press. After pressing for 15 minutes at a pressure of about 500 kPa (5 kp/cm²) the material was taken out of the press and it could now be established that the curing process, despite the short press-time, had progressed sufficiently far to obtain good assembling between the particle board and the plastic laminate. For complete final curing an hour was allowed to pass after the press operation before the strength was tested by tearing off the plastic laminate from the particle board. The breakage did hereby, to a 100 per cent, appear in the particle board and the gluing must thus be considered as completely satisfactory.

## Claims

1. A process for joining parts, of which at least one is of a material with an absorbing joint surface, e.g. a wood based material, by glueing with a curable aminoplastic adhesive, whereby a resin component of the adhesive and a hardener component, respectively, the latter containing an acid or acid-forming substance, are separately applied to the joint and that subsequently the parts to be joined are assembled, and that the adhesive is cured uder influence of pressure for a period corresponding to between 5 minutes and 5 hours at 20 degrees centigrade, characterized in, that a hardener component is provided in the form of a solution of low viscosity, that between 10 and 40 grams of the hardener solution is applied per square meter surface of at least the material with absorbing joint surface by pressing against the surface a roll, having a surface or porous, soft and absorbing material, containing the solution and that immediately after the application of the hardener solution the resin component of the adhesive is applied on top of the hardener solution by use of an application roll.

2. The method of claim 1, wherein the material with absorbing joint surface is a board material and both of its surfaces are treated with hardener solution and resin.

3. The method of claim 1, wherein the curing period corresponds to between 10 minutes and 2 hours at 20 degrees centigrade.

4. The method of claim 1, wherein the curing is carried out in a cold-press.

5. A device for the application of a hardener component and a resin component of a curable adhesive system to a joint surface, characterized in, that it comprises a hardener application roll with a surface of porous, soft and absorbing material, against which a dosage roll is contacted and a resin application roll arranged after the hardener application roll in the direction, in which the treated material is conveyed.

6. The device of claim 5, in which a further hardener application roll and a further resin application roll are arranged for treatment of both sides of boards, transported between the rolls.

## Revendications

1. Procédé pour le collage d'éléments, dont un au moins est réalisé en une matière dont la face à coller est absorbante, par exemple une matière à base de bois, au moyen d'un adhésif durcissable à base d'aminoplastes, dans lequel le composant résineux de l'adhésif et le durcisseur, ce dernier comprenant un acide ou une substance formant un acide, sont appliqués séparément sur la surface à coller, ensuite les parties à coller sont assemblées et l'adhésif est fait durcir sous pression pendant un intervalle de temps compris entre 5 mn et 5 h à 20°C, caractérisé en que le durcisseur est utilisé sous forme d'une solution de faible viscosité, en ce qu'on applique entre 10 et 40 g de la solution du durcisseur par mètre carré de surface, pour le moins sur la matière dont la surface à coller est absorbante, au moyen d'un rouleau qu'on presse contre la surface, ce rouleau possédant une surface en matière poreuse, molle et absorbante et contenant la solution du durcisseur et, en ce qu'immédiatement après l'application de la solution du durcisseur le composant résineux de l'adhésif est appliqué sur la solution du durcisseur au moyen d'un rouleau applicateur.

2. Procédé selon la revendication 1 caractérisé en que la matière ayant une surface à coller absorbante est un matériel en forme de panneau et en ce que ses deux surfaces sont traitées avec la solution du durcisseur et avec la résine.

3. Procédé selon la revendication 1 caractérisé en ce que le temps de durcissement est compris entre 10 mn et 2 h à 20°C.

4. Procédé selon la revendication 1, caractérisé en ce que le durcissement est effectué dans une presse à froid.

5. Appareil pour l'application sur une surface à coller d'un durcisseur et d'un composant résineux formant un système adhésif durcissable, caractérisé en qu'il comprend un rouleau applicateur pour le durcisseur ayant une surface en matière poreuse, molle et absorbante, en contact avec un rouleau enducteur ainsi q'un rouleau applicateur de résine disposé en aval du rouleau applicateur de la résine, par rapport au sens de déplacement du matériel traité.

6. Appareil selon la revendication 5, caractérisé en ce qu'il comprend un rouleau applicateur de durcisseur et un rouleau applicateur de résine supplémentaire disposés pour le traitement des deux faces de panneaux se déplaçant entre les rouleaux.

## Patentansprüche

1. Verfahren zum Verbinden von Teilen, von denen wenigstens einer aus einem Material mit einer absorbierenden Verbindungsfläche ist, z.B. ein Material auf Holzbasis, durch Verleimen mit einem härtbaren Aminoplast-Klebstoff, wobei eine Harzkomponente des Klebstoffs und eine Härterkomponente, letztere eine Säure oder säurebildende Substanz enthaltend, getrennt auf die Verbindungsstelle aufgebracht werden, und die zu verbindenden Teile anschließend zusammengefügt werden, und der Klebstoff unter dem Einfluß von Druck, während einer Zeit entsprechend zwischen 5 Minuten und 5 Stunden bei 20°C gehärtet wird, dadurch gekennzeichnet, daß eine Härterkomponente in Form einer Lösung niedriger Viskosität vorgesehen wird, daß zwischen 10 und 40 Gramm der Härterlösung pro Quadratmeter Oberfläche von wenigstens dem Material mit der absorbierenden Verbindungsoberfläche aufgebracht wird, indem gegen die Oberfläche eine Walze mit einer Oberfläche aus porösem, weichem und absorbierendem Material, welche die Lösung enthält, gepreßt wird, und daß unmittelbar nach Aufbringung der Härterlösung die Harzkomponente des Klebemittels auf der Härterlösung unter Verwendung einer Aufbringungswalze aufgebracht wird.

2. Verfahren gemäß Anspruch 1, dadurch gekennzeichnet, daß das Material mit der absorbierenden Verbindungsoberfläche ein Pappe- oder Plattenmaterial ist und seine beiden Oberflächen mit Härterlösung und Harz behandelt werden.

3. Verfahren gemäß Anspruch 1, dadurch gekennzeichnet, daß Härtungszeit zwischen 10 Minuten und 2 Stunden bei 20°C entspricht.

4. Verfahren gemäß Anspruch 1, dadurch gekennzeichnet, daß die Härtung in einer Kaltpresse durchgeführt wird.

5. Vorrichtung zur Aufbringung einer Härterkomponente und einer Harzkomponente eines härtbaren Klebesystems auf eine Verbindungsoberfläche, dadurch gekennzeichnet, daß sie umfaßt eine Härteraufbringungswalze mit einer Oberfläche aus porösem, weichem und absorbierendem Material, gegen die eine Dosierungswalze in Kontakt gebracht ist, und eine Harzaufbringungswalze, welche nach der Härteraufbringungswalze in der Richtung, in der das behandelte Material geführt ist, angeordnet ist.

6. Vorrichtung gemäß Anspruch 5, dadurch gekennzeichnet, daß eine weitere Härteraufbringungswalze und eine weitere Harzaufbringungswalze zur Behandlung von beiden Seiten von Kartons oder Pappen oder Platten, welche zwischen den Walzen transportiert werden, angeordnet sind.